# EUROPEAN PATENT SPECIFICATION

(11) **EP 3 437 826 B1**
(45) Date of publication and mention of the grant of the patent: **27.07.2022**
(21) Application number: 17775578.2
(22) Date of filing: 31.03.2017
(51) Int. Cl.: B29C 45/84, B29C 45/64, B29C 45/76

(54) **INFORMATION MANAGEMENT DEVICE FOR INJECTION MOLDING, AND INJECTION MOLDING MACHINE**
INFORMATIONSVERWALTUNGSVORRICHTUNG ZUM SPRITZGIESSEN UND SPRITZGIESSMASCHINE
DISPOSITIF DE GESTION D'INFORMATIONS POUR MOULAGE PAR INJECTION, ET MACHINE DE MOULAGE PAR INJECTION

(30) Priority: 31.03.2016 JP 2016071610
(43) Date of publication of application: 06.02.2019
(73) Proprietor: Sumitomo Heavy Industries, Ltd., Tokyo 141-6025 (JP)
(72) Inventor: MORITA, Hiroshi, Chiba-shi Chiba 263-0001 (JP); ABE, Masahiro, Chiba-shi Chiba 263-0001 (JP); KADOWAKI, Masanori, Yokosuka-shi Kanagawa 237-8555 (JP)
(74) Representative: Louis Pöhlau Lohrentz
(86) International application number: PCT/JP2017/013724
(87) International publication number: WO 2017/171047

(56) References cited:
- EP-A1- 0 349 649
- EP-A1- 1 894 700
- EP-A2- 1 935 608
- JP-A- 2007 030 496
- JP-A- 2015 186 858
- JP-A- 2015 189 211
- US-A1- 2003 089 179

## Description

### Technical Field

The present invention relates to an information management device for injection molding and an injection molding machine.

### Background Art

In a molding machine disclosed in PTL 1, a movable die plate on which a movable mold is mounted is moved forward or rearward by a drive force of a mold opening and closing servo motor, and thus, mold closing, mold clamping, and mold opening are performed. The molding machine includes a controller which determines that abnormality occurs in the mold opening if output torque of the mold opening and closing servo motor exceeds torque for determination during the mold opening and stops a molding opening operation.

In an injection molding machine disclosed in PTL 2, the injection molding machine includes a screw having a check ring, rotation driving means for rotating the screw, axial direction driving means for driving the screw in its axial direction, and rotational force detecting means for detecting a rotational force acting on the screw.

In an injection molding machine disclosed in PTL 3, the injection molding machine includes a servomotor for rotating a screw having a pulse coder, in which the servomotor is driven in accordance with a difference between an instruction output from a control unit of the injection molding machine and an output from the pulse coder to rotate the screw.

### Citation List

### Patent Literature

[PTL 1] Japanese Unexamined Patent Application Publication No. 2009-166465
[PTL 2] European Unexamined Patent Application Publication No. 1 935 608 A2
[PTL 3] European Unexamined Patent Application Publication No. 0 349 649 A1

### Summary of Invention

### Technical Problem

An injection molding machine includes a movable portion and a drive unit which moves the movable portion.

In the related art, abnormality of the injection molding machine is detected based on a drive force of the drive unit during a movement of the movable portion. However, a movement speed or the like of the movable portion is changed so as to be set according to a mold unit, a molding material, or the like, and thus, it is difficult to cope with a wide variety of molding conditions.

The present invention is made in consideration of the above-described problem, and a main object thereof is to provide an information management device for injection molding capable of detecting deterioration of a part in a wide variety of molding conditions.

### Solution to Problem

In order to achieve the above-described object, according to an aspect of the present invention, there is provided an information management device for injection molding, which manages information on a part of an injection molding machine including a movable portion, a drive unit which moves the movable portion, and a drive force detector which detects a drive force of the drive unit, in which deterioration of the part of the injection molding machine is detected based on a detection value of the drive force detector when the movable portion stops.

### Advantageous Effects of Invention

According to the aspect of the present invention, it is possible to provide an information management device for injection molding capable of detecting deterioration of a part in a wide variety of molding conditions.

### Brief Description of Drawings

FIG. 1 is a view showing a state when mold opening of an injection molding machine according to an embodiment is completed.
FIG. 2 is a view showing a state when a mold of the injection molding machine according to the embodiment is clamped.
FIG. 3 is a view showing a temporal change of a position of a crosshead according to the embodiment.
FIGS. 4A to 4C are views showing an operation of compression molding of a mold clamping unit according to the embodiment.
FIG. 5 is a view showing the temporal change of the position of the crosshead in the compression molding of the mold clamping unit according to the embodiment.

### Description of Embodiments

Hereinafter, an embodiment of the present invention will be described with reference to the drawings. The same or corresponding reference numerals are assigned to the same or corresponding configurations in each drawing, and descriptions thereof are omitted.

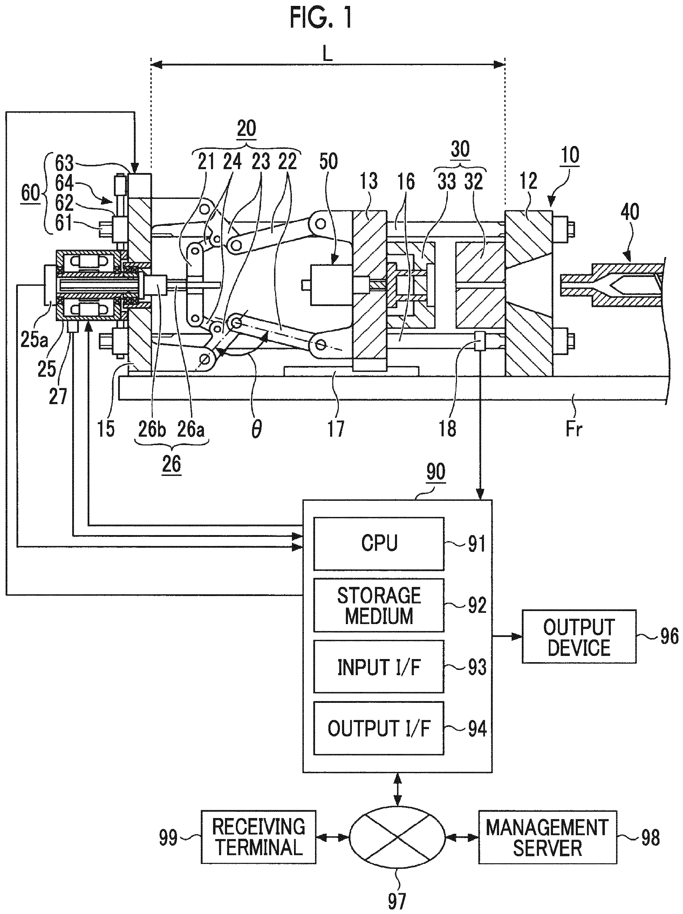

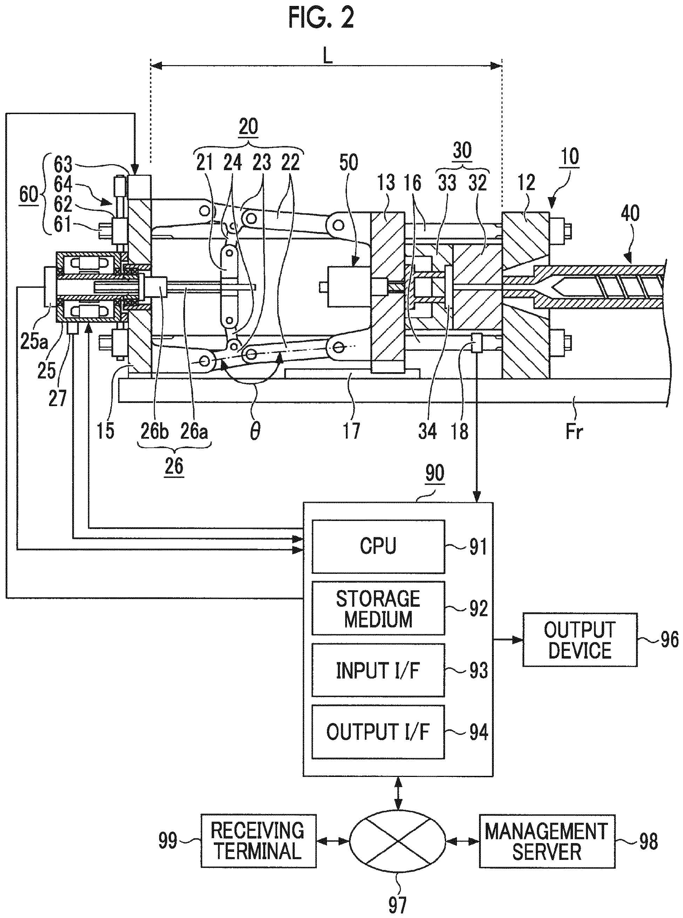

FIG. 1 is a view showing a state when mold opening of an injection molding machine according to an embodiment is completed. FIG. 2 is a view showing a state when a mold of the injection molding machine according to the embodiment is clamped. As shown in FIGS. 1 and 2, the injection molding machine includes a frame Fr, a mold clamping unit 10, an injection unit 40, an ejector unit 50, and a controller 90.

In the following descriptions, a movement direction (a right direction in FIGS. 1 and 2) of a movable platen 13 when a mold is closed is referred to a front side, and a movement direction (a left direction in FIGS. 1 and 2) of the movable platen 13 when the mold is opened is referred to a rear side.

The mold clamping unit 10 performs mold closing, mold clamping, and mold opening of the mold unit 30. For example, the mold clamping unit 10 is a horizontal type mold clamping unit in which the mold opening and closing directions are a horizontal direction. The mold clamping unit 10 includes a stationary platen 12, a movable platen 13, a toggle support 15, a tie bar 16, a toggle mechanism 20, a mold clamping motor 25, and a motion conversion mechanism 26.

The stationary platen 12 is fixed to the frame Fr. A stationary mold 32 is attached to a surface of the stationary platen 12 facing the movable platen 13.

The movable platen 13 is movable along a guide (for example, a guide rail) 17 placed on the frame Fr and is movable forward or rearward with respect to the stationary platen 12. A movable mold 33 is attached to a surface of the movable platen 13 facing the stationary platen 12.

The movable platen 13 moves forward or rearward with respect to the stationary platen 12, and thus, mold closing, mold clamping, and, mold opening are performed. The mold unit 30 is configured of the stationary mold 32 and the movable mold 33.

The toggle support 15 is connected to the stationary platen 12 at an interval, and is placed on the frame Fr to be movable in mold opening and closing directions. In addition, the toggle support 15 may be movable along a guide which is placed on the frame Fr. The guide of the toggle support 15 may be also used as the guide 17 of the movable platen 13.

Moreover, in the present embodiment, the stationary platen 12 is fixed to the frame Fr, and the toggle support 15 is movable in the mold opening and closing directions with respect to the frame Fr. However, the toggle support 15 may be fixed to the frame Fr, and the stationary platen 12 may be movable in the mold opening and closing directions with respect to the frame Fr.

The stationary platen 12 and the toggle support 15 are connected to each other at an interval by the tie bar 16. A plurality of (for example, four) tie bars 16 may be used. The tie bars 16 are parallel in the mold opening and closing directions and extend according to a mold clamping force . A mold clamping force detector 18 is provided in at least one tie bar 16. The mold clamping force detector 18 detects distortion of the tie bar 16 so as to detect the mold clamping force and sends a signal indicating a detection result to the controller 90.

In addition, the mold clamping force detector 18 is not limited to a distortion gauge type detector, and may be a piezoelectric type detector, a capacitance type detector, a hydraulic type detector, an electromagnetic type detector, or the like, and the attachment position of the mold clamping force detector is also not limited to the tie bar 16.

The toggle mechanism 20 moves the movable platen 13 with respect to the stationary platen 12. The toggle mechanism 20 is disposed between the movable platen 13 and the toggle support 15. The toggle mechanism 20 is configured of a crosshead 21, a pair of link groups, or the like. Each link group includes a first link 22 and a second link 23 which are bendably/strechably connected to each other by pins or the like. The first link 22 is attached to the movable platen 13 so as to be oscillated by pins or like and the second link 23 is attached to the toggle support 15 so as to be oscillated by pins or the like. The second link 23 is coupled to the crosshead 21 via a third link 24. If the crosshead 21 moves forward or rearward, the first link 22 and the second link 23 are bent and stretched and the movable platen 13 moves forward or rearward with respect to the toggle support 15.

In addition, the configuration of the toggle mechanism 20 is not limited to the configuration shown in FIGS. 1 and 2. For example, in FIGS. 1 and 2, the number of nodes is five. However, the number of nodes may be four, and one end portion of the third link 24 may be coupled to a node between the first link 22 and the second link 23.

The mold clamping motor 25 is attached to the toggle support 15 and operates the toggle mechanism 20. The mold clamping motor 25 moves the crosshead 21 forward or rearward, and thus, the first links 22 and the second links 23 are bent and stretched, and the movable platen 13 moves forward or rearward.

The motion conversion mechanism 26 converts a rotary motion of the mold clamping motor 25 into a linear motion of the crosshead 21. The motion conversion mechanism 26 includes a screw shaft 26a and a screw nut 26b which is screwed to the screw shaft 26a. A ball or a roller may be interposed between the screw shaft 26a and the screw nut 26b.

As shown in FIG. 1 or 2, the controller 90 includes a Central Processing Unit (CPU) 91, a storage medium 92 such as a memory, an input interface 93, and an output interface 94. The controller 90 performs various controls by causing the CPU 91 to execute a program stored in the storage medium 92. In addition, the controller 90 receives a signal from the outside through the input interface 93 and transmits a signal to the outside through the output interface 94. The controller 90 controls a mold closing process, a mold clamping process, a mold opening process, or the like.

In the mold closing process, the mold clamping motor 25 is driven to move the crosshead 21 forward to a mold closing completion position at a set speed. Accordingly, the movable platen 13 moves forward and the movable mold 33 comes into contact with the stationary mold 32. For example, a position or speed of the crosshead 21 is detected using an encoder 25a of the mold clamping motor 25 or the like. The encoder 25a detects the rotation of the mold clamping motor 25 and sends signals indicating the detection results to the controller 90.

In the mold clamping process, the mold clamping motor 25 is further driven to further move the crosshead 21 forward from the mold closing completion position to a mold clamping position, and thus, a mold clamping force is generated. When the mold is clamped, a cavity space 34 is formed between the movable mold 33 and the stationary mold 32, and the cavity space 34 is filled with a liquid molding material by the injection unit 40. A filled molding material is solidified, and thus, a molding product is obtained. A plurality of cavity spaces 34 may be provided, and in this case, a plurality of molding products may be simultaneously obtained.

In the mold opening process, the mold clamping motor 25 is driven to move the crosshead 21 rearward to a mold opening completion position at a set speed. Accordingly, the movable platen 13 moves rearward, and the movable mold 33 is separated from the stationary mold 32. Thereafter, the ejector unit 50 causes the molding product to protrude from the movable mold 33.

Meanwhile, the toggle mechanism 20 amplifies a drive force of the mold clamping motor 25 and transmits the drive force to the movable platen 13. An amplification magnification of the toggle mechanism 20 is also referred to as a toggle magnification. The toggle magnification is changed according to an angle θ (hereinafter, also referred to as a "link angle θ") between the first link 22 and the second link 23. The link angle θ is obtained from the position of the crosshead 21. When the link angle θ is 180°, the toggle magnification becomes largest.

In a case where a space of the mold unit 30 is changed by replacement of the mold unit 30, a temperature change of the mold unit 30, or the like, a mold space adjustment is performed such that a predetermined mold clamping force is obtained when the mold is clamped. For example, in the mold space adjustment, the interval L between the stationary platen 12 and the toggle support 15 is adjusted such that the link angle θ of the toggle mechanism 20 at the time of a mold touch where the movable mold 33 comes into contact with the stationary mold 32 becomes a predetermined angle.

The mold clamping unit 10 includes a mold space adjustment mechanism 60 which performs mold space adjustment by adjusting the interval L between the stationary platen 12 and the toggle support 15. The mold space adjustment mechanism 60 includes a screw shaft 61 which is formed on a rear end portion of the tie bar 16, a screw nut 62 which is rotatably held by the toggle support 15, and a mold space adjustment motor 63 which rotates a screw nut 62 screwed to the screw shaft 61.

The screw shaft 61 and the screw nut 62 are provided for each tie bar 16. A rotation of the mold space adjustment motor 63 may be transmitted to a plurality of screw nuts 62 via a rotation transmission portion 64 including a belt, a pulley, or the like. The plurality of screw nuts 62 can be synchronously rotated. In addition, it is possible to rotate the plurality of screw nuts 62 individually by changing a transmission path of the rotation transmission portion 64.

In addition, the rotation transmission portion 64 is configured of a gear or the like instead of the belt, the pulley, or the like. In this case, a driven gear is formed on an outer periphery of each screw nut 62, a drive gear is attached to an output shaft of the mold space adjustment motor 63, and an intermediate gear which engages with a plurality of driven gears and drive gears is rotatably held by a center portion of the toggle support 15.

An operation of the mold space adjustment mechanism 60 is controlled by the controller 90. The controller 90 drives the mold space adjustment motor 63 to rotate the screw nut 62, and thus, the position of the toggle support 15 which rotatably holds the screw nut 62 with respect to the stationary platen 12 is adjusted, and the interval L between the stationary platen 12 and the toggle support 15 is adjusted.

In addition, in the present embodiment, the screw nut 62 is rotatably held with respect to the toggle support 15 and the tie bar 16 in which the screw shaft 61 is formed is fixed to the stationary platen 12. However, the present invention is not limited to this.

For example, the screw nut 62 may be rotatably held with respect to the stationary platen 12 and the tie bar 16 may be fixed to the toggle support 15. In this case, the interval L can be adjusted by rotating the screw nut 62.

Moreover, the screw nut 62 may be fixed to the toggle support 15 and the tie bar 16 may be rotatably held with respect to the stationary platen 12. In this case, the interval L can be adjusted by rotating the tie bar 16.

Moreover, the screw nut 62 may be fixed to the stationary platen 12 and the tie bar 16 may be rotatably held with respect to the toggle support 15. In this case, the interval L can be adjusted by rotating the tie bar 16.

The mold space adjustment mechanism 60 rotates one of the screw shaft 61 and the screw nut 62 which are screwed to each other to adjust the interval L. A plurality of mold space adjustment mechanisms 60 may be used, and a plurality of mold space adjustment motor 63 may be used.

Meanwhile, a molding operation is repeated, and thus, a part of the mold clamping unit 10 deteriorates. In parts of the mold clamping unit 10, a part which receives a force, particularly, a sliding part relatively easily deteriorates. For example, an example of the sliding part include a pin of the toggle mechanism 20, a bearing of the motion conversion mechanism 26, or the like. The bearing may be either a sliding bearing such as a bush or a rolling bearing.

For example, due to the deterioration of the part of the mold clamping unit 10, a balance of the pair of link groups of the toggle mechanism 20 collapses, the screw shaft 26a of the motion conversion mechanism 26 is bent, or a balance of the plurality of tie bars 16 collapses. In addition, due to the deterioration of the part of the mold clamping unit 10, looseness occurs, a frictional resistance increases, and the operation becomes unstable.

In order to detect the deterioration of the part of the mold clamping unit 10, the controller 90 monitors a drive force of the mold clamping motor 25 when the crosshead 21 is stopped at a predetermined position. The stopping of the crosshead 21 may be accompanied by a movement of the crosshead 21 or may be temporarily performed during the movement. The stopping of the crosshead 21 may be performed repeatedly for each molding cycle for manufacturing the molding product, or may be performed between the molding cycles or during molding cycle. A series of operations to obtain the molding product, for example, an operation from a start of the mold closing process to a start of the next mold closing process is referred to as "shot" or the "molding cycle". The stopping may be performed during a control of the crosshead 21, and for example, may be performed during a position control of the crosshead 21. The crosshead 21 corresponds to a movable portion described in clams and the mold clamping motor 25 corresponds to a drive unit described in claims.

For example, the drive force of the mold clamping motor 25 is indicated by torque of the mold clamping motor 25 and is detected by a torque detector 27. The torque detector 27 detects a current of the mold clamping motor 25 to detect the torque of the mold clamping motor 25 and sends a signal indicating a detection result to the controller 90. The torque detector 27 corresponds to a drive force detector described in claims. In addition, the torque of the mold clamping motor 25 can be obtained from a current command value of the mold clamping motor 25.

The detection value of the torque detector 27 monitored by the controller 90 may be any of a peak value, an average value, a pattern, or the like during the stopping of the crosshead 21. The controller 90 detects the deterioration of the part of the mold clamping unit 10 by comparing the peak value or the average value and a reference value or comparing the pattern and a reference pattern. The reference value, the reference pattern, or the like is obtained by an experiment or the like in advance, and those stored in the storage medium 92 are read and used.

For example, the controller 90 detects the deterioration of the part of the mold clamping unit 10, based on the torque of the mold clamping motor 25 when the crosshead 21 is stopped at the mold opening completion position. If the part of the mold clamping unit 10 deteriorates, the crosshead 21 stops before the mold opening completion position due to the frictional resistance or the like, and the torque of the mold clamping motor 25 for moving the crosshead 21 to the mold opening completion position increases. In addition, if the part of the mold clamping unit 10 deteriorates, the torque of the mold clamping motor 25 for maintaining the crosshead 21 at the mold opening completion position increases. In a case where the part of the mold clamping unit 10 does not deteriorates, the torque of the mold clamping motor 25 for maintaining the crosshead 21 at the mold opening completion position is approximately zero. In a case where the torque of the mold clamping motor 25 is a threshold or more, the controller 90 may determine that the part of the mold clamping unit 10 deteriorates.

In addition, the controller 90 detects the deterioration of the part of the mold clamping unit 10, based on the drive force of the mold clamping motor 25 when the crosshead 21 is stopped at the mold clamping position. If the part of the mold clamping unit 10 deteriorates, the drive force of the mold clamping motor for maintaining the crosshead 21 at the mold clamping position is changed. In a case where the part of the mold clamping unit 10 does not deteriorates, the torque of the mold clamping motor 25 for maintaining the crosshead 21 at the mold clamping position is approximately constant. In a case where a variation width of the torque of the mold clamping motor 25 is a threshold or more, the controller 90 may determine that the part of the mold clamping unit 10 deteriorates.

In order to detect the deterioration of the part of the mold clamping unit 10, the controller 90 monitors distortion of the tie bar 16 when the crosshead 21 is stopped at a predetermined position. The tie bar 16 corresponds to a drive force acting portion described in claims.

For example, the distortion of the tie bar 16 can be detected by the mold clamping force detector 18. The mold clamping force detector 18 detects the distortion of the tie bar 16 and sends a signal indicating a detection result to the controller 90. The mold clamping force detector 18 corresponds to a distortion detector described in claims.

The detection value of the mold clamping force detector 18 monitored by the controller 90 may be any of a peak value, an average value, a pattern, or the like during the stopping of the crosshead 21. The controller 90 detects the deterioration of the part of the mold clamping unit 10 by comparing the peak value or the average value and a reference value or comparing the pattern and a reference pattern. The reference value, the reference pattern, or the like is obtained by an experiment or the like in advance, and those stored in the storage medium 92 are read and used.

For example, the controller 90 detects the deterioration of the part of the mold clamping unit 10, based on the distortion of the tie bar 16 when the crosshead 21 is stopped at the mold opening completion position. If the part of the mold clamping unit 10 deteriorates, for example, if the balance of the tie bar 16 collapses, the distortion remains in the tie bar 16 when the mold opening is completed. In the case where the part of the mold clamping unit 10 does not deteriorates, the distortion of the tie bar 16 is approximately zero when the mold opening is completed. In a case where the distortion of the tie bar 16 is a threshold or more, the controller 90 may determine that the part of the mold clamping unit 10 deteriorates.

In addition, in order to detect the deterioration of the part of the mold clamping unit 10, the controller 90 may monitor the distortion of the tie bar 16 when the crosshead 21 is stopped at the mold clamping position. If the part of the mold clamping unit 10 deteriorates, for example, if the balance of the tie bar 16 collapses, the distortion of the tie bar 16 is changed when the mold is clamped. In the case where the part of the mold clamping unit 10 does not deteriorates, the distortion of the tie bar 16 is approximately constant when the mold is clamped. In a case where a variation width of the distortion of the tie bar 16 is outside an allowable range, the controller 90 may determine that the part of the mold clamping unit 10 deteriorates.

In addition, the drive force acting portion may be any one as long as it is distorted by the drive force of the mold clamping motor 25, and is not limited to the tie bar 16. For example, an example of the drive force acting portion includes the toggle mechanism 20, the motion conversion mechanism 26, the movable platen 13, the stationary platen 12, or the like.

As described above, the controller 90 of the present embodiment detects the deterioration of the part of the mold clamping unit 10, based on the drive force of the mold clamping motor 25 or the distortion of the tie bar 16 when the crosshead 21 is stopped at a predetermined position. The stopping of the crosshead 21 at the predetermined position is performed irrespective of the molding conditions such as the mold unit 30 and the molding material, it is possible to cope with a wide variety of molding conditions.

The controller 90 of the present embodiment may estimate a deterioration degree of the part of the mold clamping unit 10, based on the drive force of the mold clamping motor 25 or the distortion of the tie bar 16 when the crosshead 21 is stopped at the predetermined position. A relationship between the drive force of the mold clamping motor 25 or the distortion of the tie bar 16 and the deterioration degree of the part of the mold clamping unit 10 is obtained by a durability test or the like, and the relationship stored in the storage medium 92 in advance is read and used.

The controller 90 causes the output device 96 to output a notification on the estimated deterioration degree. An image display device, a speaker, a warning lamp, or the like is used for the output device 96, and an image, sound, light, or the like are used for notification. A user of the injection molding machine who has received the notification can know the deterioration degree or the like of the part of the mold clamping unit 10.

For example, the controller 90 may cause the output device 96 to output a notification indicating a relationship between the estimated deterioration degree and an allowable range of the estimated deterioration degree. A user of the injection molding machine who has received the notification can know a remaining life span or the like of the part of the mold clamping unit 10. Before the part of the mold clamping unit 10 is damaged, it is possible to replace the part of the mold clamping unit 10.

Moreover, the controller 90 may cause the output device 96 to output an alarm in a case where the estimated deterioration degree exceeds the allowable range. A plurality of thresholds of the allowable range may be prepared, and a plurality of alarms may be prepared. In this case, the controller 90 causes the output device 96 to output the information corresponding to the estimated deterioration degree.

By notifying a slight abnormality before a severe abnormality occurs, it is possible to take measures such as preparation and replacement of a part to be replaced in advance before the part of the mold clamping unit 10 is broken. The replacement is performed before the part of the mold clamping unit 10 is broken, and thus, it is possible to avoid damages of surrounding parts and interruption of production of a molding product. In addition, since it is only necessary to prepare the part to be replaced before the severe abnormality occurs after the light abnormality is notified, a storage period of the part to be replaced can be shortened, and a space of a storage place can be reduced.

The controller 90 may stop the operation of the injection molding machine in a case where the estimated deterioration degree exceeds the allowable range. For example, the controller 90 may stop the operation of the injection molding machine in a case where the controller 90 detects the severe abnormality. For example, the operation to be stopped may be a cycle operation of repeatedly manufacturing the molding product or the like. If no severe abnormality has occurred and only signs of severe abnormalities have occurred, the controller 90 may continue the cycle operation. Thereafter, in a case where the severe abnormality occurs, the cycle operation is interrupted, and a broken part is repaired or replaced.

The controller 90 may transmit the notification on the deterioration of the part of the mold clamping unit 10 to a management server 98 via a network 97 such as an internet line. In this case, the controller 90 transmits a notification on the deterioration of the part of the mold clamping unit 10 and an identification number of the injection molding machine in association with each other to management server 98. Similarly to the controller 90, the management server 98 includes a CPU, a storage medium, or the like.

The management server 98 receives information transmitted from the controller 90. The management server 98 transmits the received information to a receiving terminal 99 registered in advance via the network 97. The receiving terminal 99 may be a fixed terminal such as a computer or a mobile terminal such as a mobile phone. The user of the injection molding machine does not need to contact a manager of the injection molding machine. Based on the information received by the receiving terminal 99, the manager prepares the part to be replaced and handles a repair worker.

In addition, the controller 90 may transmit the information to the receiving terminal 99 registered in advance without passing through the management server 98.

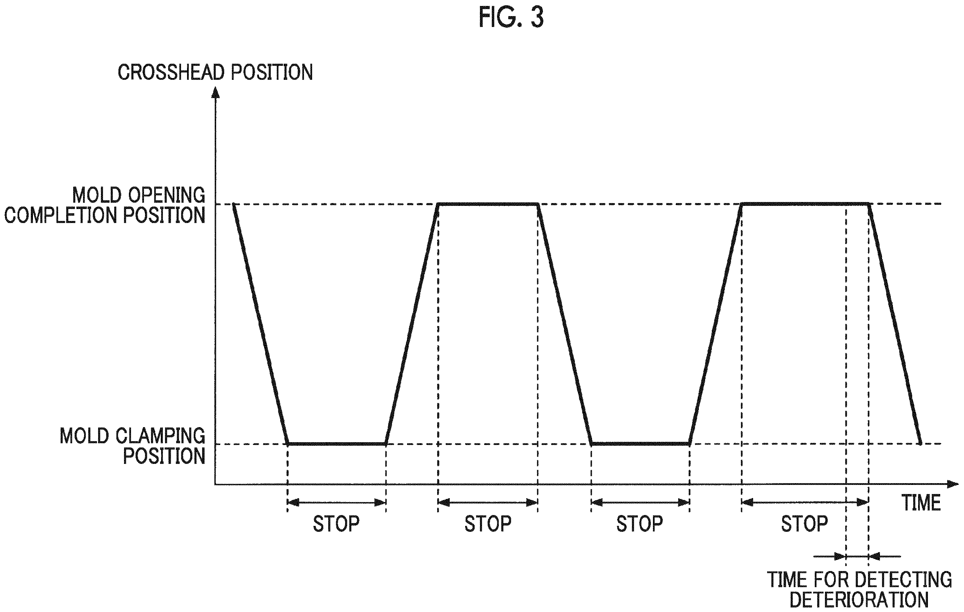

FIG. 3 is a view showing a temporal change of a position of the crosshead according to the embodiment. The position of the crosshead 21 shown in FIG. 3 is controlled by the controller 90.

In the mold closing process, the mold clamping motor 25 is driven to move the crosshead 21 forward to a mold closing completion position at a set speed. Accordingly, the movable platen 13 moves forward and the movable mold 33 comes into contact with the stationary mold 32. For example, the position or the speed of the crosshead 21 is detected using an encoder 25a of the mold clamping motor 25 or the like. The encoder 25a of the mold clamping motor 25 detects the rotation of the mold clamping motor 25 and sends a signal indicating the detection result to the controller 90.

In the mold clamping process, the mold clamping motor 25 is further driven to further move the crosshead 21 forward from the mold closing completion position to a mold clamping position, and thus, a mold clamping force is generated. When the mold is clamped, a cavity space 34 is formed between the movable mold 33 and the stationary mold 32, and the cavity space 34 is filled with a liquid molding material by the injection unit 40. A filled molding material is solidified, and thus, a molding product is obtained. A plurality of cavity spaces 34 may be provided, and in this case, a plurality of molding products may be simultaneously obtained.

In the mold opening process, the mold clamping motor 25 is driven to move the crosshead 21 rearward to the mold opening completion position at a set speed. Accordingly, the movable platen 13 moves rearward, and the movable mold 33 is separated from the stationary mold 32. Thereafter, the ejector unit 50 causes the molding product to protrude from the movable mold 33.

The setting conditions in the mold closing process and the mold clamping process are collectively set as a series of setting conditions. For example, the speed or the position (including a switching position of the speed, the mold closing completion position, and the mold clamping position) of the crosshead 21 in the mold closing process and the mold clamping process is collectively set as a series of setting conditions. In addition, instead of the speed, the position, or the like of the crosshead 21, a speed, a position, or the like of the movable platen 13 may be set. In addition, the position (for example, the mold clamping position) of the crosshead or the position of the movable platen, the mold clamping force may be set.

As shown in FIG. 3, the crosshead 21 being moved forward from the mold opening completion position to the mold clamping position, the crosshead 21 being stopped at the mold clamping position for a predetermined time, the crosshead 21 being moved rearward from the mold clamping position to the mold opening completion position, and the crosshead 21 being stopped at the mold opening completion position for a predetermined time are repeatedly performed by the controller 90. The crosshead 21 is stopped at the mold opening completion position and the mold clamping position.

Meanwhile, the controller 90 may detect the deterioration of the part of the mold clamping unit 10, based on a drive force of the mold clamping motor 25 when the crosshead 21 is stopped at at least one position of the mold opening completion position and the mold clamping position, and the controller 90 may detect presence or absence of abnormality due to the deterioration.

For example, the controller 90 detects the deterioration of the part of the mold clamping unit 10, based on torque of the mold clamping motor 25 when the crosshead 21 is stopped at the mold opening completion position. If the part of the mold clamping unit 10 deteriorates, the crosshead 21 stops before the mold opening completion position due to the friction resistance or the like, and thus, the torque of the mold clamping motor 25 for moving the crosshead 21 to the mold opening completion position increases. In addition, if the part of the mold clamping unit 10 deteriorates, the torque of the mold clamping motor 25 for maintaining the crosshead 21 at the mold opening completion position increases . In a case where the part of the mold clamping unit 10 does not deteriorates, the torque of the mold clamping motor 25 for maintaining the crosshead 21 at the mold opening completion position is approximately zero. In the case where the torque of the mold clamping motor 25 is the threshold or more, the controller 90 may determine that the part of the mold clamping unit 10 deteriorates and abnormality occurs.

In addition, the controller 90 detects the deterioration of the part of the mold clamping unit 10, based on the drive force of the mold clamping motor 25 when the crosshead 21 is stopped at the mold clamping position. If the part of the mold clamping unit 10 deteriorates, the drive force of the mold clamping motor for maintaining the crosshead 21 at the mold clamping position is changed. In the case where the part of the mold clamping unit 10 does not deteriorates, the torque of the mold clamping motor 25 for maintaining the crosshead 21 at the mold clamping position is approximately constant. In the case where the variation width of the torque of the mold clamping motor 25 is the threshold or more, the controller 90 may determine that the part of the mold clamping unit 10 deteriorates and abnormality occurs.

The controller 90 may detect the deterioration of the part of the mold clamping unit 10, based on the distortion of the tie bar 16 when the crosshead 21 is stopped at at least one position of the mold opening completion position and the mold clamping position, and the controller 90 may detect presence or absence of abnormality due to the deterioration.

For example, the controller 90 detects the deterioration of the part of the mold clamping unit 10, based on the distortion of the tie bar 16 when the crosshead 21 is stopped at the mold opening completion position. If the part of the mold clamping unit 10 deteriorates, for example, if the balance of the tie bar 16 collapses, the distortion remains in the tie bar 16 when the mold opening is completed. In the case where the part of the mold clamping unit 10 does not deteriorates, the distortion of the tie bar 16 is approximately zero when the mold opening is completed. In the case where the distortion of the tie bar 16 is the threshold or more, the controller 90 may determine that the part of the mold clamping unit 10 deteriorates and abnormality occurs.

In addition, in order to detect the deterioration of the part of the mold clamping unit 10, the controller 90 may monitor the distortion of the tie bar 16 when the crosshead 21 is stopped at the mold clamping position. If the part of the mold clamping unit 10 deteriorates, for example, if the balance of the tie bar 16 collapses, the distortion of the tie bar 16 is changed when the mold is clamped. In the case where the part of the mold clamping unit 10 does not deteriorates, the distortion of the tie bar 16 is approximately constant when the mold is clamped. In the case where a variation width of the distortion of the tie bar 16 is outside the allowable range, the controller 90 may determine that the part of the mold clamping unit 10 deteriorates and abnormality occurs.

The controller 90 may determine the presence or absence of the abnormality due to the deterioration at a plurality of different stop positions. It is possible to determine presence or absence of a plurality of types of abnormalities by determining the presence or absence of the abnormality due to deterioration at the plurality of different stop positions, and it is possible to determine the deterioration degree at two or more levels. For example, the controller 90 can change the deterioration degrees in a case where it is determined that the abnormality occurs only at one stop position and in a case where it is determined that the abnormalities occur at a plurality of different stop positions. The deterioration degree can be determined at two or more levels, and thus, the deterioration degree can be managed with high accuracy. In addition, as described above, it is possible to output different types of alarms according to the deterioration degree.

The controller 90 may determine the presence or absence of the abnormality due to the deterioration of the motion conversion mechanism 26 in parts of the mold clamping unit 10 and estimate a deterioration site of the motion conversion mechanism 26. The deterioration site of the motion conversion mechanism 26 can be estimated from the stop position of the crosshead 21 when it is determined that there is the abnormality due to the deterioration of the motion conversion mechanism 26.

For example, in a case where the stop position of the crosshead 21 when it is determined that there is the abnormality due to the deterioration of the motion conversion mechanism 26 is the mold opening completion position, it is estimated that a portion of the screw shaft 26a screwed to the screw nut 26b when the mold opening is completed (refer to FIG. 1) is the deterioration position.

In addition, in a case where the stop position of the crosshead 21 when it is determined that there is the abnormality due to the deterioration of the motion conversion mechanism 26 is the mold clamping position, it is estimated that a portion of the screw shaft 26a screwed to the screw nut 26b when the mold is clamped (refer to FIG. 2) is the deterioration position.

In addition, in a case where there are a plurality of stop positions (for example, both the mold opening completion position and the mold clamping position) of the crosshead 21 when it is determined that there is the abnormality due to the deterioration of the motion conversion mechanism 26, the controller 90 may determine that the screw nut 26b deteriorates.

The controller 90 may set a dedicated time (for example, a time for detecting deterioration shown in FIG. 3) for detecting the deterioration of the part of the mold clamping unit 10 to a time during the molding cycle and/or a time between the molding cycles. In FIG. 3, by setting a time during the crosshead 21 stops at the mold opening completion position in one shot to be longer than a time during the crosshead stops at the mold opening completion position in another shot, the time for detecting deterioration is set to the time during the molding cycle. In FIG. 3, the time for detecting deterioration is set to an end of the stop time. However, the time for detecting deterioration may be set to the beginning of the stop time or may be set to the middle of the stop time. The time for detecting deterioration is set, and thus, the deterioration can be reliably detected.

In addition, the controller 90 set the time during the crosshead 21 stops at the mold clamping position in one shot to be longer than the time during the crosshead 21 stops at the mold clamping position in another shot, and thus, the time for detecting deterioration may be set to the middle of the molding cycle. In addition, the time for detecting deterioration may be set every time the number of shots reaches a plurality of shots determined in advance. However, the time for detecting deterioration may be set for each shot or may be set for each predetermined shot.

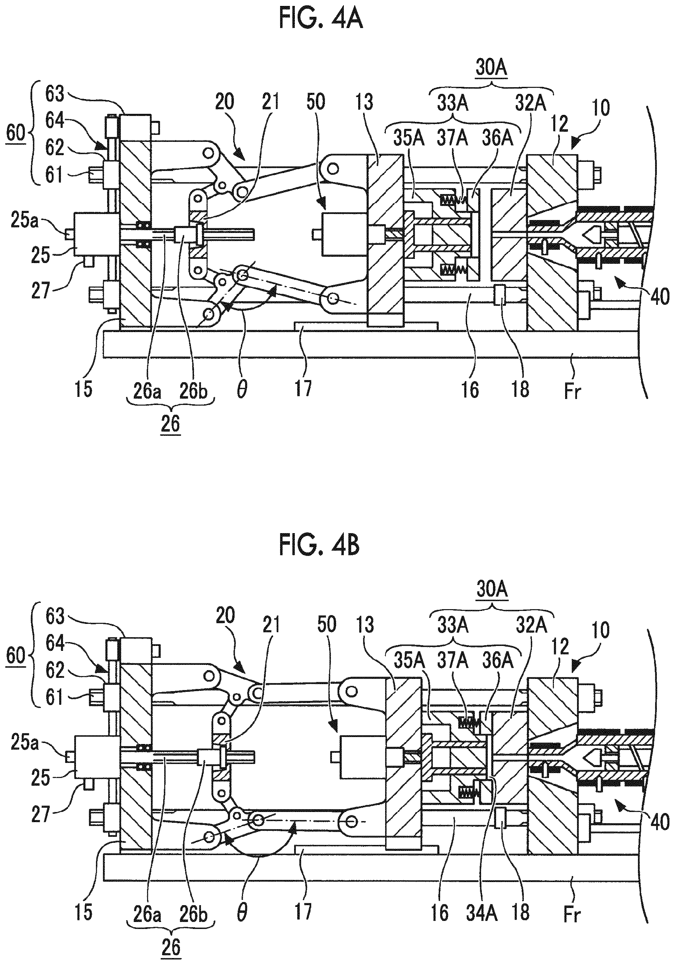

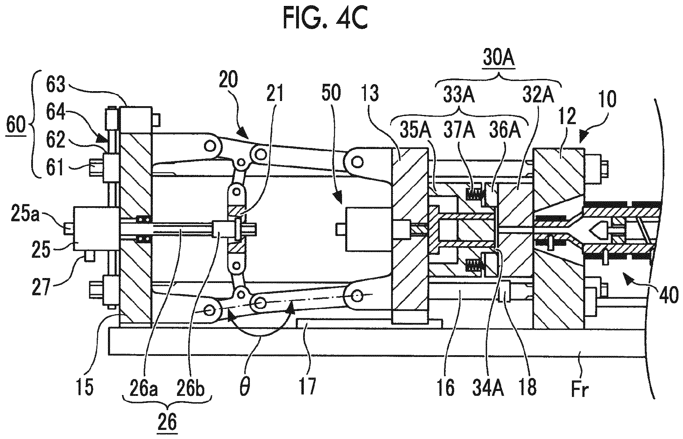

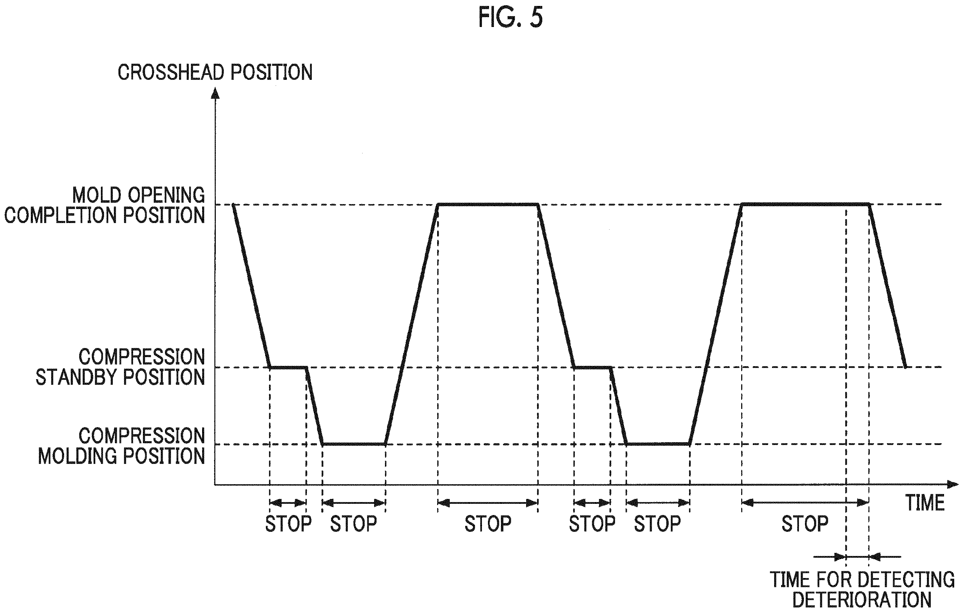

FIGS. 4A to 4C are views showing an operation of compression molding of the mold clamping unit according to the embodiment. FIG. 4A shows a state when the crosshead is positioned at the mold opening completion position, FIG. 4B shows a state when the crosshead is positioned at a compression standby position, and FIG. 4C shows a state where the crosshead is positioned at a compression molding position. FIG. 5 is a view showing the temporal change of the position of the crosshead in the compression molding of the mold clamping unit according to the embodiment.

A mold unit 30A shown in FIGS. 4A to 4C includes a stationary mold 32A which is attached to the stationary platen 12 and a movable mold 33A which is attached to the movable platen 13. The movable mold 33A includes a mold body portion 35A, a frame portion 36A, and a spring portion 37A. The frame portion 36A surrounds a protrusion portion of the mold body portion 35A and is connected to the mold body portion 35A via the spring portion 37A.

The controller 90 moves the crosshead 21 forward from the mold opening completion position shown in FIG. 4A to the compression standby position, and thus, the movable platen 13 moves forward. Accordingly, the frame portion 36A of the movable mold 33A is pressed against the stationary mold 32A, the spring portion 37A of the movable mold 33A contracts, and a cavity space 34A is formed between the mold body portion 35A of the movable mold 33A and the stationary mold 32A.

Subsequently, the controller 90 holds the crosshead 21 at the compression standby position for a predetermined time. Meanwhile, the controller 90 starts a filling process in which the cavity space 34A is filled with the molding material.

Next, the controller 90 further moves the crosshead 21 forward from the compression standby position to the compression molding position, and thus, the movable platen 13 further moves forward. Accordingly, the spring portion 37A of the movable mold 33A further contracts, the cavity space 34A decreases, and the molding material filling the cavity space 34A is compressed.

Subsequently, the controller 90 holds the crosshead 21 at the compression molding position for a predetermined time. While the crosshead 21 is held at the compression molding position for a predetermined time, the molding material filling the cavity space 34A is solidified, and thus, the molding product is obtained.

Thereafter, the controller 90 moves the crosshead 21 rearward from the compression molding position to the mold opening completion position. In addition, in the present embodiment, the crosshead 21 is held at the compression molding position for the predetermined time, and thereafter, the crosshead 21 is moved rearward to the mold opening completion position. However, during that time, the crosshead 21 may be moved forward or rearward, or the crosshead 21 may be stopped. The number of set positions of the crosshead 21 is not limited.

As shown in FIG. 5, the crosshead 21 being moved forward from the mold opening completion position to the compression standby position, the crosshead 21 being stopped at the compression standby position for a predetermined time, the crosshead 21 being moved forward from the compression standby position to the compression molding position, the crosshead 21 being stopped at the compression molding position for a predetermined time, the crosshead 21 being moved rearward from the compression molding position to the mold opening completion position, and the crosshead 21 being stopped at the mold opening completion position for a predetermined time are repeatedly performed by the controller 90. The crosshead 21 is stopped at the mold opening completion position, the compression standby position, and the compression molding position.

Meanwhile, the controller 90 may detect the deterioration of the part of the mold clamping unit 10, based on the drive force of the mold clamping motor 25 when the crosshead 21 is stopped at at least one position of the mold opening completion position, the compression standby position, and the compression molding position, and the controller 90 may detect the presence or absence of the abnormality due to the deterioration.

For example, the controller 90 detects the deterioration of the part of the mold clamping unit 10, based on torque of the mold clamping motor 25 when the crosshead 21 is stopped at the mold opening completion position. If the part of the mold clamping unit 10 deteriorates, the crosshead 21 stops before the mold opening completion position due to the friction resistance or the like, and thus, the torque of the mold clamping motor 25 for moving the crosshead 21 to the mold opening completion position increases. In addition, if the part of the mold clamping unit 10 deteriorates, the torque of the mold clamping motor 25 for maintaining the crosshead 21 at the mold opening completion position increases . In a case where the part of the mold clamping unit 10 does not deteriorates, the torque of the mold clamping motor 25 for maintaining the crosshead 21 at the mold opening completion position is approximately zero. In the case where the torque of the mold clamping motor 25 is the threshold or more, the controller 90 may determine that the part of the mold clamping unit 10 deteriorates and abnormality occurs.

In addition, the controller 90 detects the deterioration of the part of the mold clamping unit 10, based on the drive force of the mold clamping motor 25 when the crosshead 21 is stopped at the compression standby position. If the part of the mold clamping unit 10 deteriorates, the drive force of the mold clamping motor for maintaining the crosshead 21 at the compression standby position against an elastic restoring force of the spring portion 37A is changed. In the case where the part of the mold clamping unit 10 does not deteriorates, the torque of the mold clamping motor 25 for maintaining the crosshead 21 at the compression standby position is approximately constant. In the case where the variation width of the torque of the mold clamping motor 25 is the threshold or more, the controller 90 may determine that the part of the mold clamping unit 10 deteriorates and abnormality occurs.

In addition, the controller 90 detects the deterioration of the part of the mold clamping unit 10, based on the drive force of the mold clamping motor 25 when the crosshead 21 is stopped at the compression molding position. If the part of the mold clamping unit 10 deteriorates, the drive force of the mold clamping motor for maintaining the crosshead 21 at the compression molding position against the elastic restoring force of the spring portion 37A or the pressure of the molding material is changed. In the case where the part of the mold clamping unit 10 does not deteriorates, the torque of the mold clamping motor 25 for maintaining the crosshead 21 at the compression molding position is approximately constant. In the case where the variation width of the torque of the mold clamping motor 25 is the threshold or more, the controller 90 may determine that the part of the mold clamping unit 10 deteriorates and abnormality occurs.

The controller 90 may detect the deterioration of the part of the mold clamping unit 10, based on the distortion of the tie bar 16 when the crosshead 21 is stopped at at least one position of the mold opening completion position, the compression standby position, and the compression molding position, and the controller 90 may detect presence or absence of abnormality due to the deterioration.

For example, the controller 90 detects the deterioration of the part of the mold clamping unit 10, based on the distortion of the tie bar 16 when the crosshead 21 is stopped at the mold opening completion position. If the part of the mold clamping unit 10 deteriorates, for example, if the balance of the tie bar 16 collapses, the distortion remains in the tie bar 16 when the mold opening is completed. In the case where the part of the mold clamping unit 10 does not deteriorates, the distortion of the tie bar 16 is approximately zero when the mold opening is completed. In the case where the distortion of the tie bar 16 is the threshold or more, the controller 90 may determine that the part of the mold clamping unit 10 deteriorates and abnormality occurs.

In addition, in order to detect the deterioration of the part of the mold clamping unit 10, the controller 90 may monitor the distortion of the tie bar 16 when the crosshead 21 is stopped at the compression standby position. If the part of the mold clamping unit 10 deteriorates, for example, if the balance of the tie bar 16 collapses, the distortion of the tie bar 16 is changed when the compression standbys. In the case where the part of the mold clamping unit 10 does not deteriorates, the distortion of the tie bar 16 is approximately constant when the compression standbys. In the case where a variation width of the distortion of the tie bar 16 is outside the allowable range, the controller 90 may determine that the part of the mold clamping unit 10 deteriorates and abnormality occurs.

In addition, in order to detect the deterioration of the part of the mold clamping unit 10, the controller 90 may monitor distortion of the tie bar 16 when the crosshead 21 is stopped at the compression molding position. If the part of the mold clamping unit 10 deteriorates, for example, if the balance of the tie bar 16 collapses, the distortion of the tie bar 16 during the compression is changed. In the case where the part of the mold clamping unit 10 does not deteriorates, the distortion of the tie bar 16 during the compression is approximately constant. In the case where the variation width of the distortion of the tie bar 16 is outside the allowable range, the controller 90 may determine that the part of the mold clamping unit 10 deteriorates and abnormality occurs.

The controller 90 may determine the presence or absence of the abnormality due to the deterioration at a plurality of different stop positions. It is possible to determine presence or absence of a plurality of types of abnormalities by determining the presence or absence of the abnormality due to deterioration at the plurality of different stop positions, and it is possible to determine the deterioration degree at two or more levels. For example, the controller 90 can change the deterioration degrees in a case where it is determined that the abnormality occurs only at one stop position and in a case where it is determined that the abnormalities occur at a plurality of different stop positions. The deterioration degree can be determined at two or more levels, and thus, the deterioration degree can be managed with high accuracy. In addition, as described above, it is possible to output different types of alarms according to the deterioration degree.

The controller 90 may determine the presence or absence of the abnormality due to the deterioration of the motion conversion mechanism 26 in parts of the mold clamping unit 10 and estimate the deterioration site of the motion conversion mechanism 26. The deterioration site of the motion conversion mechanism 26 can be estimated from the stop position of the crosshead 21 when it is determined that there is the abnormality due to the deterioration of the motion conversion mechanism 26.

For example, in the case where the stop position of the crosshead 21 when it is determined that there is the abnormality due to the deterioration of the motion conversion mechanism 26 is the mold opening completion position, it is estimated that a portion of the screw shaft 26a screwed to the screw nut 26b when the mold opening is completed (refer to FIG. 4A) is the deterioration position.

In addition, in a case where the stop position of the crosshead 21 when it is determined that there is the abnormality due to the deterioration of the motion conversion mechanism 26 is the compression standby position, it is estimated that a portion of the screw shaft 26a screwed to the screw nut 26b when the compression standbys (refer to FIG. 4B) is the deterioration position.

In addition, in a case where the stop position of the crosshead 21 when it is determined that there is the abnormality due to the deterioration of the motion conversion mechanism 26 is the compression molding position, it is estimated that a portion of the screw shaft 26a screwed to the screw nut 26b when the compression molding is performed (refer to FIG. 4C) is the deterioration position.

In addition, in a case where there are a plurality of stop positions (for example, the mold opening completion position, the compression standby position, and the compression molding position) of the crosshead 21 when it is determined that there is the abnormality due to the deterioration of the motion conversion mechanism 26, the controller 90 may determine that the screw nut 26b deteriorates.

The controller 90 may set a dedicated time (for example, a time for detecting deterioration shown in FIG. 5) for detecting the deterioration of the part of the mold clamping unit 10 to the time during the molding cycle and/or the time between the molding cycles. In FIG. 5, by setting a time during the crosshead 21 stops at the mold opening completion position in one shot to be longer than a time during the crosshead stops at the mold opening completion position in another shot, the time for detecting deterioration is set to the time during the molding cycle. In FIG. 5, the time for detecting deterioration is set to an end of the stop time. However, the time for detecting deterioration may be set to the beginning of the stop time or may be set to the middle of the stop time. The time for detecting deterioration is set, and thus, the deterioration can be reliably detected.

In addition, the controller 90 set the time during the crosshead 21 stops at the compression standby position in one shot to be longer than the time during the crosshead 21 stops at the compression standby position in another shot, and thus, the time for detecting deterioration may be set to the middle of the molding cycle. Similarly, the controller 90 set the time during the crosshead 21 stops at the compression molding position in one shot to be longer than the time during the crosshead 21 stops at the compression molding position in another shot, and thus, the time for detecting deterioration may be set to the middle of the molding cycle. In addition, the time for detecting deterioration may be set every time the number of shots reaches a plurality of shots determined in advance. However, the time for detecting deterioration may be set for each shot or may be set for each predetermined shot.

Moreover, in the present embodiment, the movable mold 33A includes the mold body portion 35A, the frame portion 36A, and the spring portion 37A. However, the stationary mold 32A may include a mold body portion, a frame portion, and a spring portion. In addition, as the member which is disposed between the mold body portion 35A and the frame portion 36A, instead of the spring portion 37A, a hydraulic cylinder may be used. In addition, the mold unit 30A may be an inlay type mold unit or the like.

Hereinbefore, the embodiment or the like of the injection molding machine is described. However, the present invention is not limited to the above-described embodiment or the like, and various modifications and improvements are possible within the scope of the present invention described in claims.

In the above-described embodiment, the controller 90 corresponds to an information management device for injection molding described in claims. However, the information management device for injection molding may be separately provided from the controller 90. In addition, in the above-described embodiment, the crosshead 21 corresponds to a movable portion described in claims and the mold clamping motor 25 corresponds to a drive unit described in claims. However, the present invention is not limited to this.

For example, the controller 90 of the above-described embodiment may be used to detect the deterioration of the part of the mold clamping unit 10. However, the controller 90 may be used to detect deterioration of a part of the injection unit 40, to detect deterioration of a part of a movement unit which causes the injection unit 40 to move close to or away from the mold unit 30, to detect deterioration of a part of the ejector unit 50, or the like. The controller 90 may be used to detect deterioration of a part receiving a force among the parts of the injection unit 40, the movement unit, the ejector unit 50, or the like, particularly, to detect deterioration of a sliding part. As described above, as the sliding part, there is a motion conversion mechanism such as a ball screw mechanism.

In the above-described embodiment, the mold clamping unit 10 is a horizontal mold clamping unit in which the mold opening and closing directions are the horizontal direction. However, the mold clamping unit 10 may be a vertical mold clamping unit in which the mold opening and closing directions are the up-down direction.

The vertical mold clamping unit includes a lower platen, an upper platen, a toggle support, a tie bar, a toggle mechanism, a mold clamping motor, a mold space adjustment mechanism, or the like. Either the lower platen or the upper platen is used as the stationary platen, and the other is used as the movable platen. A lower mold is attached to the lower platen, and an upper mold is attached to the upper platen. The mold unit is configured of the lower mold and the upper mold. The lower mold may be attached to the lower platen via a rotary table. The toggle support is disposed below the lower platen. The toggle mechanism is disposed between the toggle support and the lower platen. The tie bar is parallel in a vertical direction, penetrates the lower platen, and connects the upper platen and the toggle support to each other.

The vertical type mold space adjustment mechanism adjusts an interval between the upper platen and the toggle support according to a variation in a space of the mold unit or the like to perform the mold space adjustment. In this mold space adjustment, the interval between the upper platen and the toggle support is adjusted such that a link angle of the toggle mechanism becomes a predetermined angle at the time of a mold touch in which the upper mold and the lower mold come into contact with each other. When the mold closing is completed, the link angle can be adjusted to the predetermined angle, and when the mold is clamped, a predetermined mold clamping force can be obtained. The mold space adjustment mechanism includes a screw shaft which is formed in the tie bar, a screw nut which is held by one of the upper platen and the toggle support, and a mold space adjustment motor which rotates one of the screw shaft and the screw nut which are screwed to each other. The mold space adjustment mechanism may further include a screw nut which is held by the other of the upper platen and the toggle support.

In the above-described embodiment, the mold clamping unit 10 includes the mold clamping motor 25 which operates the toggle mechanism 20 and the toggle mechanism 20. However, the mold clamping unit 10 may have a linear motor to open and close the mold and an electromagnet to clamp the mold.

For example, an electromagnet type mold clamping unit includes a stationary platen, a movable platen, a rear platen, a tie bar, an adsorption plate, a rod, a mold space adjustment mechanism, or the like. The rear platen is disposed on a side (that is, behind the movable platen) opposite to the stationary platen based on the movable platen. The tie bar connects the stationary platen and the rear platen to each other at an interval in the mold opening and closing directions. The adsorption plate is movable forward or rearward along with the movable platen behind the rear platen. The rod is inserted into a through-hole of the rear platen and connects the movable platen and the adsorption plate to each other. An electromagnet is formed on at least one of the rear platen and the adsorption plate, an adsorption force generated by the electromagnet acts on a portion between the rear platen and the adsorption plate, and thus, a mold clamping force is generated.

The electromagnet type mold space adjustment mechanism adjusts the interval between the movable platen and the adsorption plate to perform the mold space adjustment. In this mold space adjustment, the interval between the movable platen and the adsorption plate is adjusted such that a predetermined gap is formed between the adsorption plate and the rear platen at the time of the mold touch in which the movable mold and the stationary mold come into contact with each other. When the mold closing is completed, the predetermined gap is formed between the adsorption plate and the rear platen, and when the mold is clamped, a predetermined mold clamping force can be obtained. The mold space adjustment mechanism includes a screw shaft which is formed in the rod, a screw nut which is held by one of the movable platen and the adsorption plate, and a mold space adjustment motor which rotates one of the screw shaft and the screw nut which are screwed to each other. The mold space adjustment mechanism may further include a screw nut which is held by the other of the movable platen and the adsorption plate.

### Reference Signs List

- 10:: mold clamping unit
- 12:: stationary platen
- 13:: movable platen
- 15:: toggle support
- 16:: tie bar
- 18:: mold clamping force detector
- 20:: toggle mechanism
- 21:: crosshead
- 25:: mold clamping motor
- 26:: motion conversion mechanism
- 27:: torque detector
- 30:: mold unit
- 40:: injection unit
- 50:: ejector unit
- 90:: controller

## Claims

1. An information management device (90) for injection molding, which is adapted to manage information on a part of an injection molding machine including a movable portion (21), a drive unit (25) which is adapted to move the movable portion (21) in a movement direction, and a drive force detector (27) which is adapted to detect a drive force of the drive unit (25),
**characterized in that**
deterioration of the part of the injection molding machine is detected based on a detection value of the drive force detector (27) during stop of the movable portion (21).

2. The information management device (90) for injection molding according to claim 1,
wherein the injection molding machine includes a drive force acting portion (16) which is distorted by the drive force of the drive unit (25) and a distortion detector (18) which is adapted to detect distortion of the drive force acting portion (16), and
wherein the information management device (90) for injection molding is adapted to detect deterioration of the part of the injection molding machine based on a detection value of the drive force detector (27) and a detection value of the distortion detector (18) during the stop of the movable portion (21).

3. The information management device (90) for injection molding according to any one of claims 1 to 2,
wherein the information management device (90) for injection molding is adapted to set a stop time of the movable portion (21) for detecting the deterioration of the part of the injection molding machine for each predetermined shot during a molding cycle and/or between molding cycles.

4. An injection molding machine comprising:
a mold clamping unit (10) which is adapted to perform mold closing, mold clamping, and mold opening of a mold unit (30);
an injection unit (40) which is adapted to fill an inside of the mold unit (30) with a molding material; and
the information management device (90) for injection molding according to any one of claims 1 to 3.

## Patentansprüche

1. Informationsverwaltungsvorrichtung (90) für Spritzgießen, die ausgelegt ist, Informationen über ein Teil einer Spritzgießmaschine mit einem beweglichen Abschnitt (21), einer Antriebseinheit (25), die ausgelegt ist, den beweglichen Abschnitt (21) in einer Bewegungsrichtung zu bewegen, und einem Antriebskraftdetektor (27), der ausgelegt ist, eine Antriebskraft der Antriebseinheit (25) zu detektieren, zu verwalten,
**dadurch gekennzeichnet, dass**
Verschlechterung des Teils der Spritzgießmaschine basierend auf einem Detektionswert des Antriebskraftdetektors (27) während Stopps des beweglichen Abschnitts (21) detektiert wird.

2. Informationsverwaltungsvorrichtung (90) für Spritzgießen nach Anspruch 1,
wobei die Spritzgießmaschine einen Antriebskraftwirkabschnitt (16), der von der Antriebskraft der Antriebseinheit (25) verformt wird, und einen Verformungsdetektor (18) aufweist, der ausgelegt ist, Verformung des Antriebskraftwirkabschnitts (16) zu detektieren, und
wobei die Informationsverwaltungsvorrichtung (90) für Spritzgießen ausgelegt ist, Verschlechterung des Teils der Spritzgießmaschine basierend auf einem Detektionswert des Antriebskraftdetektors (27) und einem Detektionswert des Verformungsdetektors (18) während des Stopps des beweglichen Abschnitts (21) zu detektieren.

3. Informationsverwaltungsvorrichtung (90) für Spritzgießen nach einem der Ansprüche 1 bis 2, wobei die Informationsverwaltungsvorrichtung (90) für Spritzgießen ausgelegt ist, eine Stoppzeit des beweglichen Abschnitts (21) zum Detektieren der Verschlechterung des Teils der Spritzgießmaschine für jeden vorbestimmten Schuss während eines Formzyklus und/oder zwischen Formzyklen einzustellen.

4. Spritzgießmaschine, umfassend:
eine Formschließ-/klemmeinheit (10), die ausgelegt ist, Formschließen, Formklemmen und Formöffnen einer Formeinheit (30) durchzuführen;
eine Spritzeinheit (40), die ausgelegt ist, ein Inneres der Formeinheit (30) mit einem Formmaterial zu befüllen; und
die Informationsverwaltungsvorrichtung (90) für Spritzgießen nach einem der Ansprüche 1 bis 3.

## Revendications

1. Un dispositif de gestion d'informations (90) pour moulage par injection, lequel est apte à gérer des informations sur une partie d'une machine de moulage par injection incluant une partie mobile (21), une unité d'entraînement (25) qui est apte à déplacer la partie mobile (21) dans une direction de déplacement, et un détecteur de force d'entraînement (27) qui est apte à détecter une force d'entraînement de l'unité d'entraînement (25),
**caractérisé en ce que**
une détérioration de la partie de la machine de moulage par injection est détectée sur la base d'une valeur de détection du détecteur de force d'entraînement (27) pendant un arrêt de la partie mobile (21).

2. Le dispositif de gestion d'informations (90) pour moulage par injection selon la revendication 1,
dans lequel la machine de moulage par injection inclut une partie d'action de force d'entraînement (16) qui est déformée par la force d'entraînement de l'unité d'entraînement (25) et un détecteur de déformation (18) qui est adapté à détecter la déformation de la partie d'action de force d'entraînement (16) ; et
dans lequel le dispositif de gestion d'informations (90) pour moulage par injection est adapté à détecter une détérioration de la partie de la machine de moulage par injection sur la base d'une valeur de détection du détecteur de force d'entraînement (27) et d'une valeur de détection du détecteur de déformation (18) pendant l'arrêt de la partie mobile (21).

3. Le dispositif de gestion d'informations (90) pour moulage par injection selon l'une quelconque des revendications 1 à 2 ;
dans lequel le dispositif de gestion d'informations (90) pour moulage par injection est adapté pour définir un temps d'arrêt de la partie mobile (21) pour détecter la détérioration de la partie de la machine de moulage par injection pour chaque essai prédéterminé pendant un cycle de moulage et/ou entre des cycles de moulage.

4. Une machine de moulage par injection comprenant :
une unité de serrage de moule (10) qui est adaptée à mettre en œuvre une fermeture de moule, un serrage de moule, et une ouverture de moule d'une unité de moule (30) ;
une unité d'injection (40) qui est adaptée à remplir un intérieur de l'unité de moule (30) avec un matériau de moulage ; et
le dispositif de gestion d'informations (90) pour moulage par injection selon l'une quelconque des revendications 1 à 3.
